Europäisches Patentamt

European Patent Office

Office européen des brevets

(11) Publication number: **0 035 976**
A1

## (12) EUROPEAN PATENT APPLICATION

(21) Application number: 81830025.3

(22) Date of filing: 18.02.81

(51) Int. Cl.³: **A 01 K 1/035**
A 01 K 5/00

(30) Priority: 28.02.80 IT 2022180

(43) Date of publication of application:
16.09.81 Bulletin 81/37

(84) Designated Contracting States:
AT BE CH DE FR GB LI LU NL SE

(71) Applicant: TECNIPLAST GAZZADA S.r.l.
Via lo Maggio, 6
Buguggiate(Varese)(IT)

(72) Inventor: Bernardini, Carlo
Via Gasparotto, 35
Varese(IT)

(74) Representative: Notarbartolo, Manfredi et al,
Studio Brevetti e Marchi NOTARBARTOLO & GERVASI
Viale Bianca Maria, 33
I-20122 Milano(IT)

(54) Stalling cage provided with a mobile fodder trough.

(57) The invention relates to a stalling cage (5) provided with a mobile fodder trough (3) which can be extracted from or disposed in the cage, so regulating the timing of the meals.

FIG 5

EP 0 035 976 A1

0035976

### Stalling cage provided with a mobile fodder trough.

This invention relates to a stalling cage provided with a mobile fodder trough containing fodder which can be made accessible or inaccessible to the stalled animal.

Where reference is made hereinafter to the mobile fodder through, this signifies either the fodder trough alone or the drinking vessel alone, or the two together.

Research on animal feeding has been developed only recently, and because of this problem of designing and constructing stalling cages able to supply fodder and possibly beverages to the stalled animals in a simple manner without disturbing the animals has not as yet been solved.

A further problem has been to prevent the animal escaping during the refilling of the fodder trough.

The first problem has been solved by a new cage comprising a fodder trough constituted by a fixed part and a mobile part, the former constituting the seat for the mobile part which contains the fodder, and the latter being able to be driven with a suitable vertical motion, for example downwards for inserting and upwards for extracting the mobile part of the fodder trough.

The second problem has been solved by disposing a door in the fixed part of the fodder trough, which opens on inserting the mobile part into the fixed part and closes on removing the mobile part.

A preferred embodiment of the invention is represented by way of non-limited example in the following figures in which :

Figure 1 is a front view of the mobile part of the fodder trough

Figure 2 is a side view of Figure 1.

Figure 3 is a front view of the fixed part of the fodder trough and of the water bottle resting on the grid.

Figure 4 is a side view of Figure 3 with the mobile part of the fodder trough shown in dashed and dotted lines.

Figure 5 is a view of Figure 3 from above, showing the door closed.

Figure 6 is a side view of the container or which the grid of Figures 3, 4 and 5 can be fitted.

Figure 7 is a front view of the container of Figure 6.

The mobile fodder through 3 is contituted by a hollow parallelepiped which is tapered lowerly and is closed by a grid 17, and is provided upperly with a plate 1 comprising two fixing holes 2.

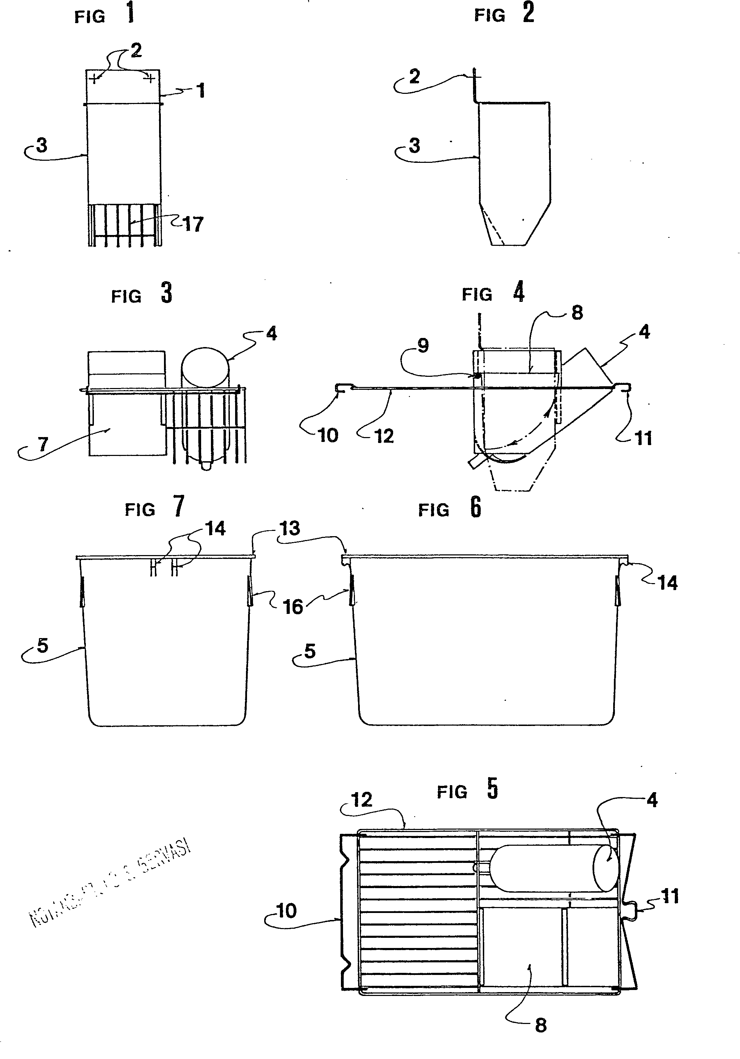

The food which fills the fodder trough of Figure 1 projects from the grid, and can be easily reached by the animal. The bottle mouth is at a greater distance from the floor than the bottom of the mobile part of the fodder trough, as can be seen in Figure 3.

The fodder trough 3 can be inserted into the box 7, in which case it lies as shown by dashed and dotted lines in Figure 4. In particular, Figure 4 shows that a door 8 is hinged to the fixed part of the fodder trough and is kept closed, i.e. in a horizontal position, by a spiral spring 9. The door 8, which when closed ensures that the animals cannot escape from the cage, can be opened into a vertical position by the mobile fodder trough when this is inserted into the fixed part. The fodder trough 3/7 and the drinking vessel 4 are supported by the grid 12, which is supported by the flanges 13 of the container 5 to which it can be fixed in a mobile manner to the projections 14 provided on the container 5 by the hooks 10 and 11. The containers are also provided with four projections 16 for stacking the empty containers.

As stated initially, the fodder trough comprises a mobile part which can be inserted into or extracted form the cage. The timing of the animal's meals can be regulated automatically in a programmed manner by using

known apparatus, not described herein.

Preferably the door 8 is constructed at least partly of an anti-friction material in order to prevent noise which can damage the animal.

0035976

Claims:

1. A stalling cage comprising a container and a grid which can be removably fixed to the container, the grid being provided with a drinking vessel and a fodder trough, wherein the fodder trough comprises a mobile part containing the fodder and a fixed part acting as the seat for the mobile part.

2. A cage as claimed in claim 1, wherein that portion of the mobile part which projects from the bottom of the fixed part is constituted partly or entirely by a profiled grid.

3. A cage as claimed in claim 1 or 2, wherein the fixed part of the fodder trough is provided with a door which closes when the mobile part of the fodder trough is extracted and opens when the mobile part is inserted into the fixed part.

4. A cage as claimed in one of the preceding claims, wherein the door is of an anti-friction plastics material.

5. A cage as claimed in one of the preceding claims, wherein the base of the mobile part of the fodder trough is lower than the base of the drinking vessel.

6. A cage as described and illustrated in the accompanying figures.

FIG 1

FIG 2

FIG 3

FIG 4

FIG 7

FIG 6

FIG 5

0035976

1/1

0035976

European Patent
Office

EUROPEAN SEARCH REPORT

Application number

EP 81 83 0025

# DOCUMENTS CONSIDERED TO BE RELEVANT

| Category | Citation of document with indication, where appropriate, of relevant passages | Relevant to claim |
|---|---|---|
| | US - A - 3 468 291 (ALLEN)<br>* Column 3, lines 10-38;<br>column 4, lines 38-64;<br>figures 1,2 * | 1-3 |
| | -- | |
| | US - A - 1 879 332 (KULP)<br>* Page 1, line 68 to page 2,<br>line 47; figures * | 1,3 |
| | -- | |
| | US - A - 3 699 925 (VAN DONGEN)<br>* Column 1, line 48 to column 2,<br>line 40 * | 1,3 |
| | -- | |
| | FR - A - 1 584 570 (IFFA-<br>CARWORTH)<br>* Figures 8-10 * | 1 |
| | -- | |
| | GB - A - 890 698 (SOUTHERN<br>ILLINOIS UNIVERSITY FOUNDATION)<br>* Page 4, lines 76-122 * | 1,2 |
| | -- | |
| | GB - A - 682 198 (TIBBITS-ALLEN)<br>* Page 1, lignes 67-78; figure<br>2 * | 1,2 |
| | ----- | |

CLASSIFICATION OF THE APPLICATION (Int. Cl.³)

A 01 K   1/035
5/00

TECHNICAL FIELDS SEARCHED (Int. Cl.³)

A 10 K   1/00
5/00
39/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&  member of the same patent family.
corresponding document

The present search report has been drawn up for all claims

| Place of search | Date of completion of the search | Examiner |
|---|---|---|
| The Hague | 21-05-1981 | CRUCHTEN |

EPO Form 1503.1   06.78